# EUROPEAN PATENT APPLICATION

(11) **EP 2 108 578 A1**
(43) Date of publication of application: **14.10.2009**
(21) Application number: 08007111.1
(22) Date of filing: 10.04.2008
(51) Int. Cl.: B62K 25/02

(54) **Front fork for bicycle**

(71) Applicant: Yuan Min An Enterprise Co., Ltd., Fong Yuan, Taichung (TW)
(72) Inventor: Yu, Kuo-Pin Yuan Min An Enterprise Co., Ltd., Fong Shih Road, Fong Yuan, Taichung (TW)
(74) Representative: Becker Kurig Straus

(57) **Abstract**

A front fork (10, 30) for a bicycle includes an upright tube (20, 32), a fork crown (22, 34) and two branch tubes (24, 36). The fork crown (22, 34) is mounted on a bottom end of the upright tube (20, 32). The branch tubes (24, 36) each have a top connected to the fork crown (22, 34), and a rib (26, 38) located inside an upper section (28, 40) thereof. Thus, the upper sections (28, 40) of the branch tubes (24, 36) have well structural rigidity for increasing the transmission efficiency of the bicycle. The lower sections (29) of the branch tubes (24, 36) have well flexibility for enhancing the rider's riding comfort.

## Description

### BACKGROUND OF THE INVENTION

### 1. Field of the Invention

The present invention relates generally to a bicycle, and more specifically to a front fork for a bicycle, which has well rigidity and flexibility.

### 2. Description of the Related Art

A conventional front fork for a bicycle includes an upright tube, a fork crown mounted on a bottom end of the upright tube, and two branch tubes for connection of a front wheel each having a top end thereof connected to the fork crown. When the bicycle is ridden, the front fork bears directly the vibration generated from the front wheel such that the front fork needs to be met the request of high structural rigidity, especially for the branch tubes connected to the front wheel. Therefore, the conventional front fork, which is made of fiber reinforced resin, will be mounted with one or more ribs inside the upright tube or the branch tubes for enhancing the structural rigidity thereof.

Although the structural rigidity of the front fork and the transmission efficiency of the bicycle can be enhanced by the ribs, the vibration generated from the front wheel will be transmitted upwards through the front fork more effeciently, making a rider uncomfortable. Thus, the issue of how to provide both structural rigidity of the front fork and the rider's comfort is always the manufacture's concern.

### SUMMARY OF THE INVENTION

The present invention has been accomplished in view of the above-noted circumstances. It is one objective of the present invention to provide a front fork for a bicycle, which has well rigidity and flexibility to enhance the rider's comfort without losing the transmission efficiency of the bicycle.

To achieve this objective of the present invention, the front fork for the bicycle comprises an upright tube, a fork crown and two branch tubes. The fork crown is mounted on a bottom end of the upright tube. The branch tubes each have a top connected to the fork crown, and a rib located inside an upper section thereof.

Accordingly, the upper sections of the branch tubes have well structural rigidity to enhance the transmission efficiency of the bicycle, and lowers sections of the branch tubes have well flexibility to make the rider comfortable.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG 1 is a front view of the front fork according to a first preferred embodiment of the present invention;
FIG 2 is a sectional view taken along line 2-2 of FIG 1;
FIG 3 is a front view of the front fork according to a second preferred embodiment of the present invention;
FIG 4 is a front and partially cutaway view of the front fork according to the second preferred embodiment of the present invention;
FIG. 5 is a lateral and cutaway view of the branch tubes of the front fork according to the second preferred embodiment of the present invention, and
FIG 6 is a sectional view taken along line 6- 6 of FIG. 5.

### DETAILED DESCRIPTION OF THE INVENTION

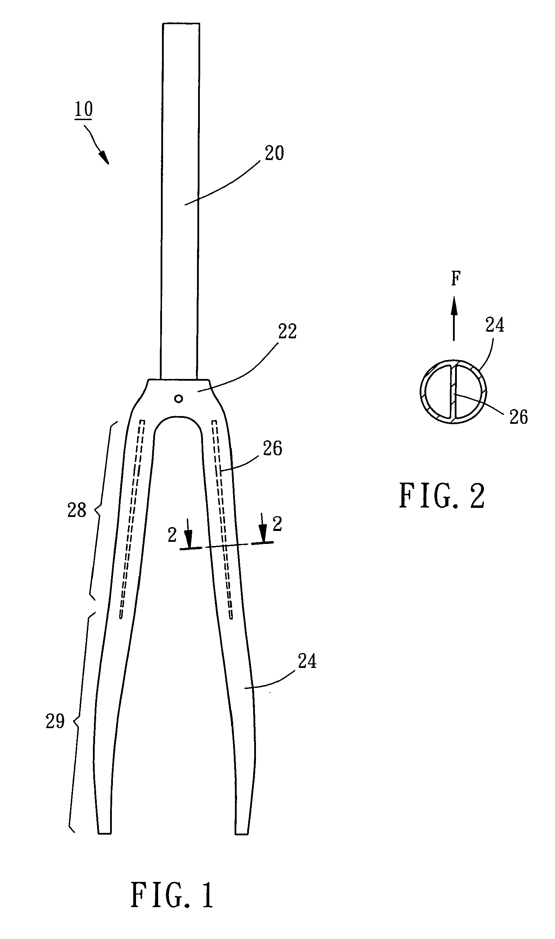

As shown in FIGS. 1 and 2, a front fork **10** for a bicycle in accordance with a first preferred embodiment of the present invention is integrally made of fiber reinforced resin, comprising an upright tube **20**, a fork crown **22**, and two branch tubes **24**. The fiber may adopt, but not limited to, carbon fiber, glass fiber, boron fiber or Kevlar fiber. The resin may adopt, but not limited to, thermosetting resin or thermoplastic resin.

The fork crown **22** is integrally mounted on a bottom end of the upright tube **20**.

The branch tubes **24** each have a top integrally connected to the fork crown **22**, and a rib **26** located inside an upper section **28** thereof. The ribs **26** each extend from the top of the branch tube **24** to a middle of the branch tube **24**, as shown in FIG. 2, and are substantially parallel to a forward direction F of the bicycle, and each have a thickness tapering off downward. The branch tubes **24** have no rib inside lower sections **29** thereof.

Since the upper sections **28** of the branch tubes **24** are provided with the ribs **26**, the branch tubes **24** have well structural rigidity to increase transmission efficiency of the bicycle. Further, because having no rib, the lower sections **29** of the branch tubes **24** have well flexibility to absorb partially the vibration or stress generated from a front wheel of the bicycle, reducing the vibration acting on the rider's hand and enhancing the riding comfort. Furthermore, because the thickness of the ribs **26** taper off downward, the structure strength of the branch tubes **24** are gradually changed from the tops to the bottoms, but not changed suddenly, thereby preventing the branch tubes **24** from generating stress concentration due to the sudden change of the structure of the branch tubes **24** when the stress is transmitted upwards from an axle center of the front wheel along the branch tubes **24**.

The front fork of the present invention can be made with various kinds of design on the basis of the spirit of the present invention. For example, the length and the position of the rib can be changed subject to the actual need. In addition, the upright tube, the fork crown, and the branch tubes can be individually manufactured and then assembled together.

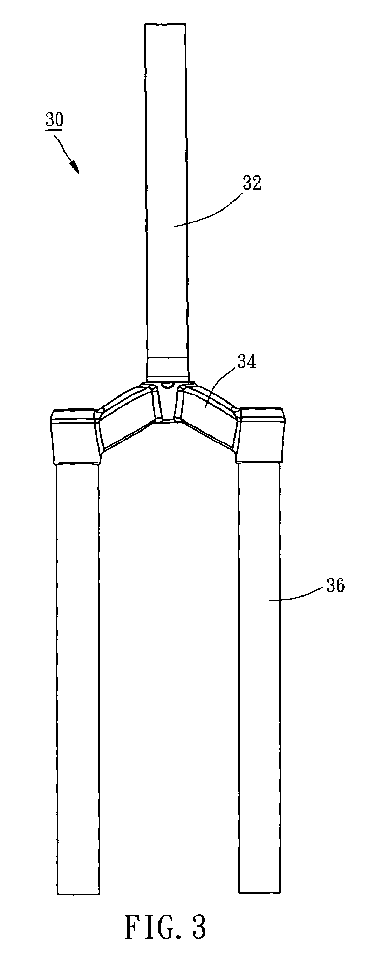

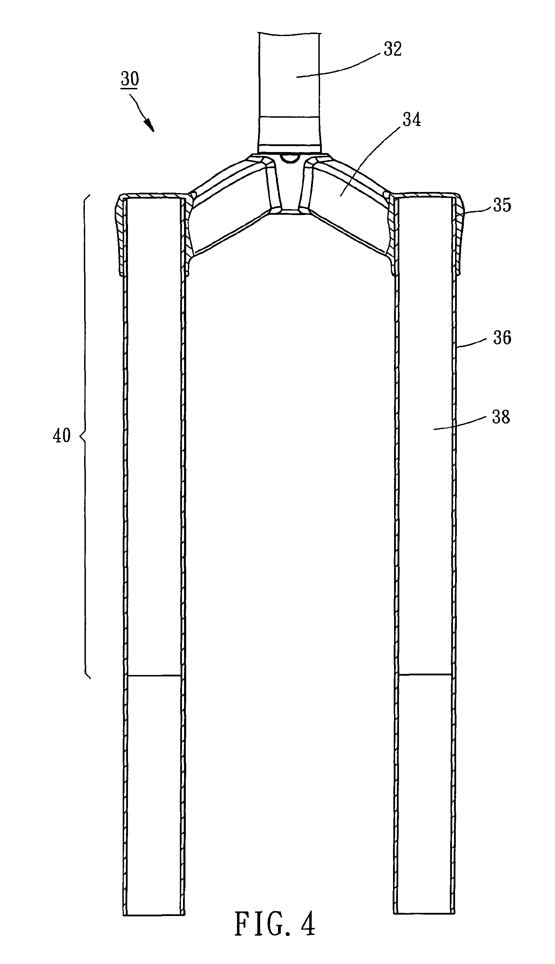

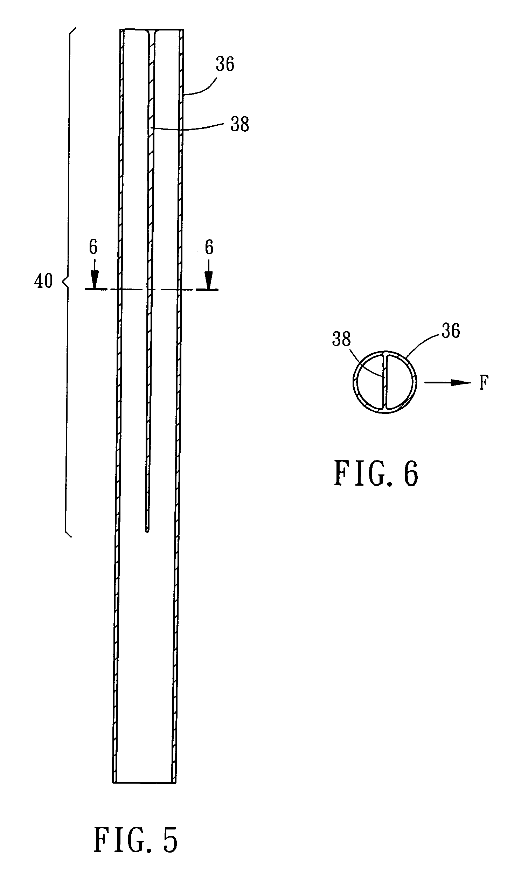

As shown in FIGS. 3 to 6, a front fork **30** in accordance with a second preferred embodiment of the present invention comprises an upright tube **32**, a fork crown 34 integrated with the upright tube 32, and two branch tubes 36. The fork crown **34** is provided at each of two ends thereof with a connecting hole **35** for connection of the branch tube **36**, and at the upper section **40** thereof with a rib **38.** The length of the rib **38**, which is longer than that of the rib in the first embodiment, is about two-thirds of the total length of the branch tube **36**, thereby providing higher structure strength than that of the branch tube in the first embodiment. As shown in FIG 6, the ribs **38** of the branch tubes **36** are about vertical to the forward direction **F** of the bicycle for enhancing the lateral structure strength of the branch tubes **36.**

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A front fork (10, 30) for a bicycle, comprising:
an upright tube (20, 32);
a fork crown (22, 34) mounted on a bottom end of said upright tube (20, 32); and
two branch tubes (24, 36), each of which has a top connected to said fork crown (22, 34), and a rib (26, 38) located inside an upper section (28, 40) thereof.

2. The front fork (30) as claimed in claim 1, wherein said ribs (38) of said branch tubes (36) are substantially vertical to a forward direction (F) of the bicycle.

3. The front fork (10) as claimed in claim 1, wherein said ribs (26) of said branch tubes (24) are substantially parallel to a forward direction (F) of the bicycle.

4. The front fork (10, 30) as claimed in claim 1, wherein said rib (26, 38) of said branch tube (24, 36) extends from said top of said branch tube (24, 36) to a middle of said branch tube (24, 36).

5. The front fork (10, 30) as claimed in claim 1, wherein said rib (26, 38) of said branch tube (24, 36) has a thickness tapering off downward.
